# EUROPEAN PATENT SPECIFICATION

(11) **EP 0 359 878 B1**
(45) Date of publication and mention of the grant of the patent: **17.03.1993**
(21) Application number: 88308751.2
(22) Date of filing: 21.09.1988
(51) Int. Cl.: B01D 35/28

(54) **Filter screen assembly**
Mehrfach-Filtersieb
Assemblage de tamis de filtre

(43) Date of publication of application: 28.03.1990
(73) Proprietor: United Wire Limited, Edinburgh EH5 1HT (GB)
(72) Inventor: Souter, George Lawrence, Aberdeen Scotland (GB)
(74) Representative: Nash, Keith Wilfrid

(56) References cited:
- DE-A- 2 513 101
- DE-A- 3 139 279
- DE-U- 8 235 215
- US-A- 2 792 906
- AUFBEREITUNGS-TECHNIK, no. 11, 1st November 1967, pages 646-656; K. WOLFF: "Siebböden aus Gummi und Chemiewerkstoffen"

## Description

### Field of the invention

This invention relates to a filter screen assembly, more especially a filter screen assembly of the kind which in use is located in the vibrating basket of a filtering machine for the treatment of slurries or the like.

### Background to the invention

A filter screen assembly conventionally comprises a steel frame with one or more filtering meshes secured and tensioned over its area. In use, the mesh can become damaged, creating holes through which can pass material which the mesh is intended to hold back. Replacement of the mesh in such an event is expensive and time consuming, requiring removal of the frame from the machine, removal of the damaged mesh, replacement by a new mesh and tensioning of the latter, and replacement of the frame in the machine.

It is known to effect patching of a damaged mesh with metal sheet patches or, in the case of a multiple mesh assembly, to bond the two meshes together at the site of damage. The former procedure results in diminished throughput, whilst the latter results in reduced efficiency of the so-called blinding action which is intended to take place in use, whereby the differential vibrations of the two meshes serve to dislodge material tending to clog the upper mesh. Both procedures, whilst being more economical than replacement of a complete mesh, suffer from the problem that they are just as time consuming as a complete mesh replacement.

In US-A-2792906 there is disclosed a filter screen assembly of a type comprising a principal frame the area of which is subdivided by integrally formed crosspieces into a plurality of equally sized and shaped sub-areas, and a corresponding plurality of removable inserts each in the form of a sub-frame carrying a filter mesh.

DE-U-8235215 discloses a filter arrangement in which individual inserts are secured to a supporting frame by a plurality of fasteners passing through apertures in the inserts.

It is an object of the present invention to provide an improved filter screen assembly which assists in providing a solution to the above-described problem.

### The invention

According to one aspect of the present invention a filter screen assembly of the type described above and as defined in the preamble of claim 1 is characterised in that the principal frame and the inserts are made of a moulded plastic material, in that each insert carries a tensioned filter mesh, and in that the outer periphery of each insert co-operates with a mutually shaped inner periphery of the crosspieces defining the corresponding sub-area, such that each insert is individually removable as a releasable press fit or snap fit in its corresponding sub-area.

According to another aspect of the invention, there is provided a method of enabling repair of a damaged filter screen assembly as hereinbefore defined, and comprising the step that when in use the screen assembly is damaged, only the insert containing the site of damage is removed and is replaced by a fresh insert carrying an undamaged mesh.

Other features of the invention are defined in the dependent claims herein contained.

### Description of Embodiment

A filter screen assembly in accordance with the invention is exemplified in the following description and with reference to the accompanying drawings, in which:-
- Figure 1: is an exploded perspective view of the filter screen assembly; and
- Figures 2 and 3: are enlarged cross-sectional views on the lines 2-2 and 3-3 of Figure 1, respectively.

Referring to the drawings, a rectangular principal frame 10 is moulded of glass-fibre reinforced polyester resin compound. The frame 10 consists of a border 12 subdivided by integrally formed cross-pieces 14 and 16 into equally shaped and sized sub-areas 18.

An insert for each sub-area comprises a sub-frame 20 moulded of like material and carrying a screen mesh (not shown) tensioned over its area in a conventional manner.

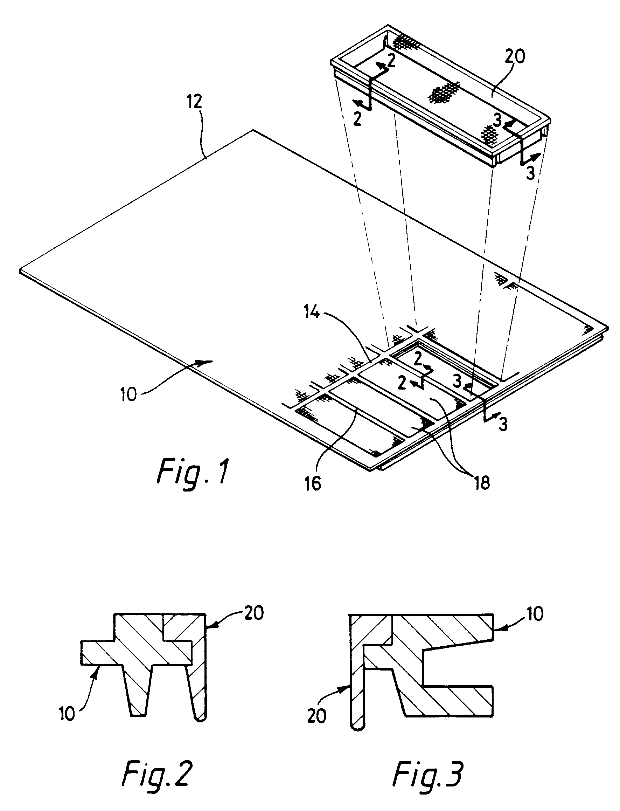

The peripheries of the sub-areas 18 of the principal frame 10 and of the sub-frames 20 are mutually shaped, at least along two opposite sides, to enable the insert to be secured as a press fit or snap fit into the sub-area, as by means of cooperating grooves and projections. One possible configuration will be clear from Figures 2 and 3. A thermally re-activatable isocyanate glue may be employed to achieve a more secure releasable fixing, if desired. Rubber sealing gaskets (not shown) may also be employed to seal the peripheral joints between the sub-areas and the inserts, again if desired or expedient.

In use, when a screen mesh becomes damaged, it is only necessary to replace the insert containing the site of damage by a fresh insert. In some instances this may be possible without even necessitating the requirement to remove the filter screen assembly from the vibratory basket of the filtering machine.

## Claims

1. A filter screen assembly comprising a principal frame (10) the area of which is subdivided by integrally formed crosspieces (14, 16) into a plurality of equally sized and shaped sub-areas (18), and a corresponding plurality of removable inserts (20) each in the form of a sub-frame carrying a filter mesh, characterised in that the principal frame and the inserts are made of a moulded plastic material, in that each insert (20) carries a tensioned filter mesh, and in that the outer periphery of each insert co-operates with a mutually shaped inner periphery of the crosspieces defining the corresponding sub-area, such that each insert is individually removable as a releasable press fit or snap fit in its corresponding sub-area.

2. An assembly according to claim 1, characterised in that the moulded plastic material is glass-fibre reinforced plastic material.

3. An assembly according to claim 2, characterised in that the plastic material is a mouldable polyester compound.

4. An assembly according to any one of claims 1 to 3, characterised in that the principal frame (10) is square or rectangular and divided by crosspieces extending in mutually perpendicular directions parallel to its sides (12).

5. An assembly according to any of claims 1 to 4, characterised in that two or more inserts (20) are secured or securable in overlying relationship in each sub-area of the principal frame (10).

6. An assembly according to any of claims 1 to 4, characterised in that each insert has two or more overlying meshes.

7. An assembly according to any of claims 1 to 6, characterised by a peripheral seal carried by the principal frame or by the insert to seal the joint therebetween.

8. A method of enabling repair of a damaged filter screen assembly according to any of claims 1 to 7, and comprising the step that when in use the screen assembly is damaged, only the insert containing the site of damage is removed and is replaced by a fresh insert carrying an undamaged mesh.

## Patentansprüche

1. Filtersiebanordnung mit einem Hauptrahmen (10), dessen Fläche durch integral geformte Querstücke (14, 16) in eine Vielzahl von Teilflächen (18) gleicher Größe und gleicher Form unterteilt ist, und mit einer entsprechenden Vielzahl von entfernbaren Einsätzen (20), deren jeder die Form eines ein Filtermaschennetz aufnehmenden Teilrahmens hat, **dadurch gekennzeichnet,** daß der Hauptrahmen und die Einsätze aus einem Form-Kunststoffmaterial hergestellt sind, daß jeder Einsatz (20) ein unter Spannung stehendes Filtermaschennetz aufnimmt, und daß der äußere Umfang eines jeden Einsatzes mit einem passend geformten inneren Umfang der Querstücke zusammenwirkt, der die entsprechende Teilfläche festlegt, derart, daß jeder Einsatz als lösbarer Paßsitz oder Schnappsitz in seiner entsprechenden Teilfläche individuell entfernt werden kann.

2. Anordnung nach Anspruch 1, dadurch gekennzeichnet, daß das Form-Kunststoffmaterial glasfaserverstärktes Kunststoffmaterial ist.

3. Anordnung nach Anspruch 2, dadurch gekennzeichnet, daß das Kunststoffmaterial ein preßbarer Polyester-Verbundstoff ist.

4. Anordnung nach einem der Ansprüche 1 - 3, dadurch gekennzeichnet, daß der Hauptrahmen (10) Quadrat- oder Rechteckform hat und durch Querstücke unterteilt ist, die in zueinander senkrechten Richtungen parallel zu den Seiten (12) verlaufen.

5. Anordnung nach einem der Ansprüche 1 - 4, dadurch gekennzeichnet, daß zwei oder mehr Einsätze (20) übereinanderliegend in jeder Teilfläche des Hauptrahmens (10) befestigt oder befestigbar sind.

6. Anordnung nach einem der Ansprüche 1 - 4, dadurch gekennzeichnet, daß jeder Einsatz zwei oder mehr übereinanderliegende Maschennetze aufweist.

7. Anordnung nach einem der Ansprüche 1 - 6, gekennzeichnet durch eine Umfangsdichtung, die durch den Hauptrahmen oder durch den Einsatz zur Abdichtung der Verbindung dazwischen aufgenommen ist.

8. Verfahren zur Durchführung von Reparaturen an einer beschädigten Filtersiebanordnung nach einem der Ansprüche 1 -7, bei dem dann, wenn im Betrieb die Siebanordnung beschädigt ist, nur der Einsatz, der die beschädigte Stelle aufweist, entfernt und durch einen neuen, ein unbeschädigtes Maschennetz aufnehmenden Einsatz ersetzt wird.

## Revendications

1. Assemblage de tamis de filtre comprenant un cadre principal (10) dont la surface est subdivisée par des pièces en croix formées solidairement (14,16) en une pluralité de sous-surfaces de taille et de forme identique (18), et en une pluralité correspondante d'inserts amovibles (20), chacun sous la forme d'un sous-cadre portant un treillis de filtrage, caractérisé en ce que le cadre principal et les inserts sont faits d'un matériau de plastique moulé, en ce que chaque insert (20) porte un treillis de filtre tendu, et en ce que la périphérie extérieure de chaque insert coopère avec une périphérie intérieure formée réciproquement des pièces en croix définissant la sous-surface correspondante, de façon que chaque insert soit individuellement amovible selon un ajustement à pression ou un ajustement à déclic libérable dans sa sous-surface correspondante.

2. Assemblage selon la revendication 1, caractérisé en ce que le matériau de plastique moulé est un matériau de plastique renforcé de fibres de verre.

3. Assemblage selon la revendication 2, caractérisé en ce que le matériau plastique est un composé de polyester moulable.

4. Assemblage selon l'une quelconque des revendications 1 à 3, caractérisé en ce que le cadre principal (10) est carré ou rectangulaire et est divisé par des pièces en croix s'étendant dans des directions réciproquement perpendiculaires, parallèlement à ses côtés (12).

5. Assemblage selon l'une quelconque des revendications 1 à 4, caractérisé en ce que deux ou plus inserts (20) sont fixés ou peuvent être fixés dans une relation de superposition dans chaque sous-surface du cadre principal (10).

6. Assemblage selon l'une quelconque des revendications 1 à 4, caractérisé en ce que chaque insert comporte deux treillis superposés ou davantage.

7. Assemblage selon l'une quelconque des revendications 1 à 6, caractérisé par un joint étanche périphérique, porté par le cadre principal ou par l'insert, pour rendre étanche le joint qui se trouve entre eux.

8. Procédé donnant une possibilité de réparation d'un assemblage de tamis de filtre endommagé selon l'une quelconque des revendications 1 à 7, et comportant l'étape , lorsque l'assemblage de filtre est endommagé en utilisation, de retirer seulement l'insert contenant l'endroit du dégât et de le remplacer par un nouvel insert portant un treillis en bon état.
